# EUROPEAN PATENT SPECIFICATION

(11) **EP 1 491 980 B1**
(45) Date of publication and mention of the grant of the patent: **28.07.2010**
(21) Application number: 04250884.6
(22) Date of filing: 19.02.2004
(51) Int. Cl.: G05D 23/20, F24F 11/00, G05D 23/19, G05D 1/02, B25J 9/16

(54) **Indoor environmental control system and method of controlling the same**
Innenraum-Klimatisierungssystem und Verfahren zu dessen Steuerung
Système de climatisation d'intérieur et son procédé de commande

(30) Priority: 23.06.2003 KR 2003040847
(43) Date of publication of application: 29.12.2004
(73) Proprietor: SAMSUNG ELECTRONICS CO., LTD., Suwon-si, Gyeonggi-do (KR)
(72) Inventor: Park, Ki-cheol, Taean-eup Hwasung-city Kyungki-do (KR); Oh, Yeon-taek, Suji-eup Yongin-city Kyungki-do (KR); Koh, Won-jun, Paldal-ku Suwon-city Kyungki-do (KR); Kim, Yong-jae, Kangnam-ku Seoul City (KR)
(74) Representative: Grootscholten, Johannes A.M.

(56) References cited:
- US-A- 4 493 100
- US-A- 5 927 599
- US-A1- 2003 028 286
- LILIENTHAL A ET AL: "A stereo electronic nose for a mobile inspection robot" PROCEEDINGS OF THE IEEE INTERNATIONAL WORKSHOP ON ROBOTIC SENSING, 5 June 2003 (2003-06-05), pages 51-56, XP010649078

## Description

The present invention relates to an indoor environmental control system and a method of controlling the same and more particularly, to an indoor environment control system and a method of controlling the same, which aims to optimize indoor environments through a home network.

Generally, an indoor environmental control system controls indoor environments such as temperature, humidity and air cleanness, and includes an indoor environmental device such as an air conditioner, a heater and an air cleaner. The indoor environmental device comprises a sensor to sense the indoor environments, and a controller receiving information on the sensed indoor environments and displaying the indoor environments on a display. Further, the controller controls a temperature controller and a humidity controller to change the indoor environments according to user settings.

Generally, the indoor environmental control device is immovably installed at a specific place in a room, so that sensing the indoor environments is limited to a predetermined area and not to the whole room. Hence, it is difficult to optimize the indoor environments.

Recently, a home network system has been designed, wherein a home server receives information on home appliances and the indoor environments from the home appliances such as the indoor environmental control device, and controls the home appliances according to user settings. In the home network system, a user may access the home server through a cellular phone, a personal digital assistant (PDA) or the like, and can set up indoor temperature, indoor humidity, the brightness of an electric light, a channel of a television and volume of audio devices as desired. Then, the home server controls the home appliances linked to a home network according to user settings.

US Patent application 2003/0028286A1 discloses a system and method that use impulse radio technology to enhance the capabilities of a robot. In one embodiment, a system, a robot and a method are provide that use the communication capabilities of impulse radio technogy to help a control station better control the actions of the robot.

Journal article "a stereo electronic nose for a mobile inspection robot" from proceedings of the IEEE International Workshop on Robotic Sensing, 5 June 2003 by Lilien Thal et al discloses the design of a gas-sensitive system (mobile nose) that is suitable for use a mobile robot. The stereo architecture comprises two equivalent sets of gas sensors mounted inside separated ventilated tubes (or nostrils).

US Patent 4493100 discloses an apparatus for controlling an air conditioner by voice. Voice commands of two types are recognised by an air conditioner: (1) a first command to jump to a different air delivery temperature after which a gradual automatic return to the previously set temperature occurs, or (2) a second command which will stop the automatic return and some arbitrary temperature. US Patent 5927599 discloses a wireless air conditioning control system. A thermostat assembly measures ambient temperature in an area in which the air conditioning system provides conditioned air. It compares the measured ambient temperature with a predetermined target temperature and wirelessly transmits air conditioning voice signals to an air conditioning control assembly.

Accordingly, embodiments of the present invention aim to provide an indoor environment control system and a method of controlling the same, which can optimize indoor environments through a home network.

Additional aspects and advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 schematically illustrates an indoor environmental control system according to an embodiment of the present invention;
Figure 2 illustrates a network structure for the indoor environmental control system of Figure 1;
Figure 3 is a control block diagram of the indoor environmental control system according to an embodiment of the present invention;
Figure 4 is a map containing information on indoor environments, according to an embodiment the present invention; and
Figure 5 is a control flowchart of the indoor environmental control system according to an embodiment the present invention.

Reference will now be made in detail to the embodiments of the present invention, examples of which are illustrated in the accompanying drawings, wherein like reference numerals refer to like elements throughout. The embodiments are described below in order to explain the present invention by referring to the figures.

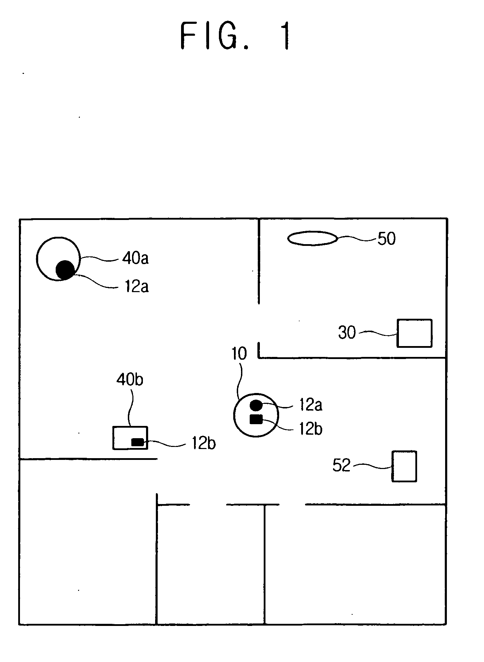

Figure 1 schematically illustrates an indoor environmental control system according to an embodiment of the present invention. An indoor environmental control system comprising an indoor environmental device 40 comprising an air conditioner/heater unit and 40a an air cleaner 40b to control indoor environments such as temperature, humidity and air cleanness; a mobile sensor 10 comprising a temperature sensor 12a and an air cleanness sensor 12b to sense the indoor environments, and transmitting information on the sensed indoor environments to a control server 30 through a wireless network; and the control server 30 to control the indoor environmental device 40 based upon the information received from the mobile sensor 10.

The mobile sensor 10 is a mobile robot. Further, the mobile sensor 10, the indoor environmental control device 40, and the control server 30 are linked to one another through a home network.

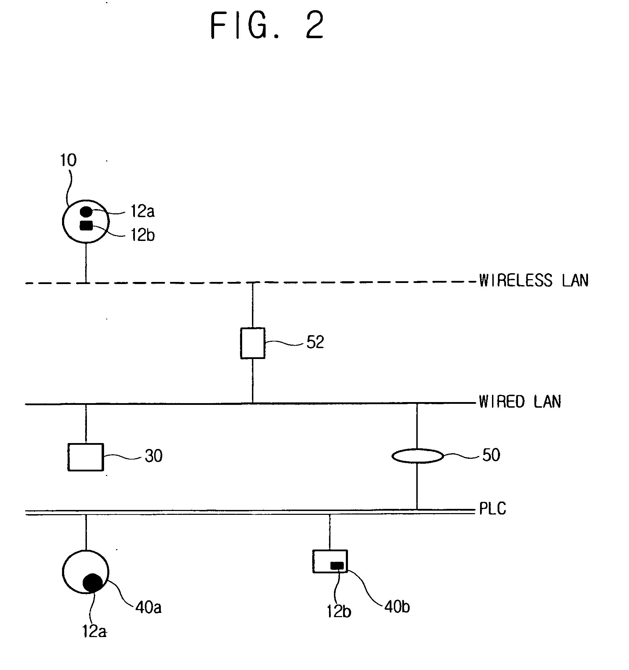

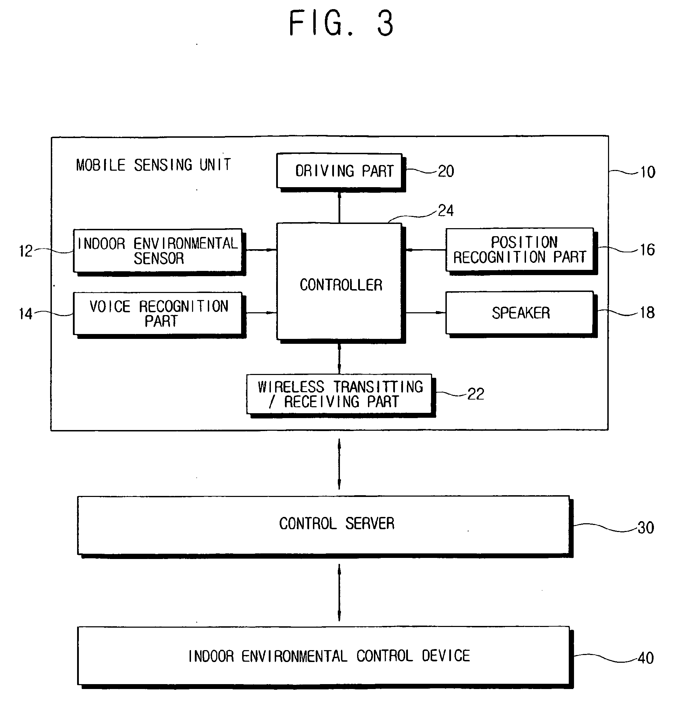

The home network for the indoor environment control system has a structure as shown in Figure 2, wherein the control server 30 is connected with an access point 52 and a wireless transmitting/receiving part 22 (shown in Figure 3) provided in the mobile sensor 10 wirelessly accesses the access point 52 connected with the control server 30, thereby accessing the home network.

The control server 30 is linked to the indoor environmental control device 40 by a power line communication (PLC) using a PLC gateway 50, thereby constructing the home network. The power line communication is a technology which has an access to high-speed Internet and transmits signals about voice and data such as a text and a picture over a power main. In the PLC, the power main at a home or an office is employed as both an electric power line and a communication line. Since the power mains have been laid at the home or the office, laying new cables to access the high-speed Internet is unnecessary.

However, the construction of the home network is not limited to the PLC. Instead, other communication protocols such as IEEE (Institute of Electrical and Electronic Engineers) 1394, Home PNA (Home Phoneline Networking Alliance) or Bluetooth, etc. may be used.

Figure 3 is a control block diagram of the indoor environmental control system according to an embodiment of the present invention. In Figure 3, the indoor environmental control system according to an embodiment of the present invention comprising an indoor environmental control device 40 to control the indoor environments, a mobile sensor 10 comprising a wireless transmitting/receiving part 22 having a wireless network accessing module such as a wireless LAN (local area network) card or Bluetooth circuitry to wirelessly access the control server 30, a driver 20 to move the mobile sensor 10, a position recognizer 16 to recognize a position of itself, a voice recognizer 14 to recognize a voice command of a user, a speaker 18 to output sound, an indoor environmental sensor 12 to sense the indoor environments, and a controller 24 to control the above described components of the mobile sensor 10; and the control server 30 to control the indoor environmental control device 40 based on information transmitted from the mobile sensor 10.

The driver 20 drives a motor provided in the mobile sensor 10 to move the mobile sensor 10 in response to a control signal from the controller 24.

The position recognizer 16 comprising a video signal processing board (not shown) and a camera (not shown) to recognize the position of itself. The controller 24 controls the camera of the position recognizer 16 to take a photograph to recognize the position of itself in response to an input by a user, and controls the video signal processing board to process a video signal of the photograph transmitted from the camera. Then, the controller 24 analyzes the processed video signal and determines the position of the mobile sensor 10.

The voice recognizer 14 is provided with a voice recognition engine as a module. The voice recognizer 14 analyzes the voice command of a user through the voice recognition engine, creates a predetermined code based on the analyzed voice command, and transmits the code corresponding to the controller 24. The controller 24 transmits a control signal based on the received code to the control server 30, thereby controlling the indoor environmental control device 40 accessing the control server 30.

The controller 24 controls the speaker 18 to output a controlled result as a voice, wherein the controlled result is transmitted from the indoor environmental control device 40 to the mobile sensor 10 through the control server 30, thereby allowing a user to easily know the indoor environments.

The indoor environmental sensor 12 comprising a temperature sensor 12a and an air cleanness sensor 12b to sense the indoor environments such as temperature, humidity and air cleanness.

The controller 24 receives a position request command and an indoor environment request command from the control server 30, and periodically transmits information on its position analyzed by the position recognizer 16 and on the indoor environments sensed by the indoor environmental sensor 12 to the control server 30 through the wireless transmitting/receiving part 22. The controller 24 transmits information in real time to the control server 30.

Further, the controller 24 allows the control server 30 to control the indoor environmental control device 40 based upon the voice command of a user recognized by the voice recognizer 14. Thus, the indoor environmental control device 40 controls the indoor environments according to the voice command of a user.

The mobile sensor 10 further comprises an obstacle sensing part (not shown) to sense an obstacle to be moved. The obstacle sensing part comprises a video signal processing board (not shown) and a camera (not shown). In the obstacle sensing part, a video signal of a photograph taken by the camera is processed by the video signal processing board according to control of the controller 24. Thus, the controller 24 controls the driver 20 to operate based upon the processed video signal received from the video signal processing board of the obstacle sensing part, so that the mobile sensor 10 can cope with the obstacle.

The control server 30 receives the information on the position and on the indoor environments from the mobile sensor 10, and determines the indoor environments according to the positions based upon the information received from the mobile sensor 10. Thus, the control server 30 controls the indoor environmental control device 40 based upon the determined indoor environments.

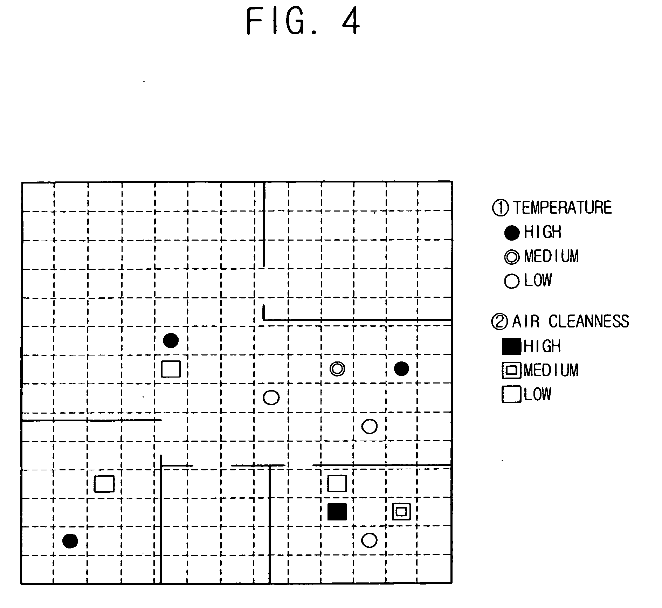

Determining the indoor environments according to the positions can be achieved by real-time estimate algorithm to estimate the real-time indoor environments, and a map divided by a lattice as shown in Figure 4. For example, in the map of Figure 4, a room is divided by a square lattice of imaginary lines, wherein the information on the indoor environments sensed in one lattice are the same.

When the control server 30 receives the information on the position and the indoor environments from more than a predetermined number of lattices, the control server 30 estimates the indoor environments based on the received information samples by using the real-time estimate algorithm.

There, at a place where the mobile sensor 10 cannot reach, the indoor environments can be estimated by using another algorithm considering elements such as heat transfer and air fluid mechanics.

When the control server 30 does not receive enough information on the position and the indoor environments, the control server 30 transmits a command to the mobile sensor 10 to move and further sense the indoor environments.

There, the control server 30 updates the map by using the real-time estimate algorithm based upon the information on the position and the indoor environments periodically received from the mobile sensor 10. Further, the control server 30 periodically transmits information on the map to the indoor environmental control device 40.

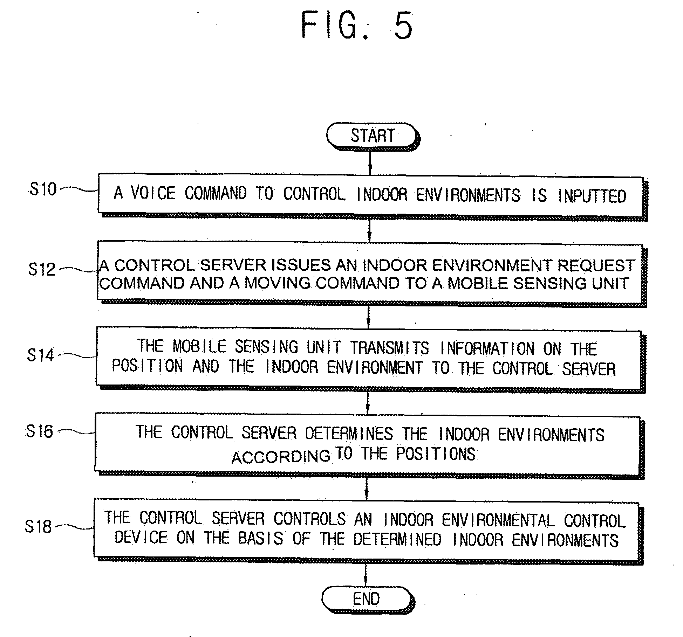

An operation of the indoor environmental control system according to an embodiment of the present invention will be described hereinbelow with reference to Figure 5. At operation S10, when a user gives a command by a voice to control the indoor environments, the voice recognizer 14 of the mobile sensor 10 recognizes the voice command. Then, the controller 24 transmits the control signal corresponding to the recognized voice command to the indoor environmental control device 40 through the control server 30, and the indoor environmental control device 40 transmits its operating information to the control server 30. At operation S12 the control server 30 transmits an indoor environment request command and a moving command to the mobile sensor 10. Then, the controller 24 of the mobile sensor 10 controls the driver 20 to move the mobile sensor 10, and controls the indoor environmental sensor 12 to sense the indoor environments. At operation S14, the controller 24 transmits the information on the position and the indoor environments to the control server 30. At operation S16, the control server 30 determines the indoor environments according to the positions based upon the information on the positions and on the indoor environments received from the mobile sensor 10. Then, the map containing the information on the indoor environments is estimated. At operation S18, the control server 30 controls the indoor environmental control device 40 based upon the determined indoor environments. Thus, the indoor environments are optimized.

The control server may be added to the indoor environmental control device.

In the above-described embodiment, the mobile sensor 10 recognizes the position of itself, and transmits information on the recognized position to the control server 30. However, the control server may directly recognize the position of the mobile sensor 10.

The indoor environmental control device may be added to the mobile sensor 10.

Further, the indoor environmental control device may be turned on/off by the voice command of a user.

According to an embodiment of the present invention, the indoor environments are sensed by the mobile sensor 10, and the control server 30 controls the indoor environmental control device 40 by estimating the map based on the sensed indoor environments, wherein the map contains the information on the indoor environments according to the positions. Thus, the indoor environments can be optimized.

As described above, an embodiment of the present invention provides an indoor environment control system and a method of controlling the same, which can optimize indoor environments through a home network.

## Claims

1. An indoor environmental control system having an indoor environmental control device (40) to control at least one indoor environment, comprising:
a mobile sensor (10) being movable, and the mobile sensor comprising:
a wireless transmitting/receiving part (22) operable to wirelessly transmit and receive information;
an indoor environmental sensor (12) operable to sense the indoor environment; and
a controller (24) operable to transmit the information on the indoor environment sensed by the indoor environmental sensor through the wireless transmitting/receiving part; and
a control server (30) operable to receive the information transmitted from the mobile sensor so as to control the indoor environmental control device based upon the information received, the mobile sensor further comprising a position recognizer (16) to recognize a position of itself;
the controller being operable to transmit the information on the position recognized by the position recognizer and the information on the indoor environments sensed by the indoor environmental sensor to the control server through the wireless transmitting/receiving part, **characterised in that**
the control server is operable to estimate a map based upon the information on the position and the information on the indoor environments received from the mobile sensor, and to control the indoor environmental control device to control the indoor environments based upon the estimated map.

2. The indoor environmental control system of claim 1, wherein the indoor environment comprises at least one of temperature, humidity and air cleanness.

3. The indoor environmental control system of claim 1 or 2, wherein the mobile sensor further comprises a driver (20) to move the mobile sensor.

4. The indoor environmental control system of any one of the preceding claims, wherein the mobile sensor further comprises a voice recognizer (14) to recognize a voice command of a user, and wherein the controller is operable to control the indoor environmental control device to control the indoor environments according to the voice command recognized by the voice recognizer.

5. The indoor environmental control system of any one of the preceding claims, wherein the mobile sensor is a mobile robot.

6. The indoor environmental control system of any one of the preceding claims, wherein the mobile sensor, the indoor environmental control device and the control server are linked to each other through a home network.

7. The indoor environmental control system of any one of the preceding claims, further comprising an access point (52), wherein the control server is connected with the access point and the wireless transmitting/receiving part is operable to wirelessly access the access point connected with the control server to access the home network.

8. The indoor environmental control system of any one of the preceding claims, wherein the control server is linked to the indoor environmental control device by a power line communication (PLC).

9. The indoor environment control system of any preceding claim, wherein the position recognizer (16) comprises:
a video signal processing board to process a video signal; and
a camera to recognize a position of itself, wherein:
the controller is operable to control the camera of the position recognizer to take a photograph to recognize the position of itself in response to an input by a user, to
control the video signal processing board to process a video signal of the photograph transmitted from the camera; and
to analyze the video signal and determine the position of the mobile sensor.

10. The indoor environmental control system of any one of claims 4 or 5-9, when dependent on claim 4, wherein the voice recognizer (14) comprises a voice recognition engine operable to analyze the voice command of the user through the voice recognition engine, to create a predetermined code based on the analyzed voice command, and to transmit the code corresponding to the controller.

11. The indoor environmental control system of claim 10, wherein the controller is operable to transmit a control signal based on the received code to the control server and to control the indoor environmental control device accessing the control server.

12. The indoor environmental control system of claim 11, further comprising a speaker to output a controlled result as a voice, wherein the controlled result is transmitted from the indoor environmental control device to the mobile sensor through the control server.

13. The indoor environmental control system of any one of the preceding claims, wherein the indoor environmental sensor comprises a temperature sensor (12a) and an air cleanness sensor (12b) to sense the indoor environments.

14. The indoor environmental control system of any one of claims 3-13, wherein the mobile sensor further comprises an obstacle sensing part to sense an obstacle to be moved.

15. The indoor environmental control system of claim 14, wherein the obstacle sensing part comprises:
a video signal processing board to process a video signal; and
a camera, wherein the video signal of a photograph taken by the camera is processed by the video signal processing board and the controller is operable to control the driver to operate based upon the processed video signal received from the video signal processing board of the obstacle sensing part to allow the mobile sensor to cope with the obstacle.

16. The indoor environmental control system of any preceding claim, wherein the map is divided by a plurality of square lattices and the information on the indoor environments sensed in one of the square lattice are the same.

17. The indoor environmental control system of claim 16, wherein the control server is operable to receive information on the position and the indoor environments from a predetermined number of lattices and to estimate the indoor environments based on the received information by using real-time estimate algorithm.

18. A method of controlling an indoor environmental control system having an indoor environmental control device (4) to control at least one indoor environment, the method comprising the steps of:
moving a mobile sensor (10);
sensing the indoor environment and recognizing a position of itself at the mobile sensor (10);
transmitting the information on the position of itself and the information on the indoor environment sensed to a control server(30) from the mobile sensor;
controlling the indoor environmental control device based upon the information received from the mobile sensor at the control server;
**characterised by**
estimating a map based upon the information on the position and the information on the indoor environments received from the mobile sensor, and controlling the indoor environmental control device to control the indoor environments based upon the estimated map at the control server.

19. The method of claim 18, wherein the indoor environment comprises at least one of temperature, humidity and air cleanness.

20. The method of any one of claims 18 or 19, further comprising:
recognizing a voice command of a user; and
controlling the indoor environmental control device to control the indoor environments according to the voice command recognized.

## Patentansprüche

1. Innenraum-Klimatisierungssystem mit einer Innenraum-Klimatisierungseinrichtung (40) zur Regelung zumindest eines Innenraumklimafaktors, umfassend:
einen mobilen Sensor (10), der beweglich ist, und wobei der mobile Sensor umfasst:
ein drahtloses Sende-/Empfangsteil (22), das betreibbar ist, um Informationen drahtlos zu senden und zu empfangen;
einen Innenraumklimasensor (12), der betreibbar ist, um den Innenraumklimafaktor wahrzunehmen; und
einen Controller (24), der betreibbar ist, um die Informationen über den vom Innenraumklimasensor wahrgenommenen Innenraumklimafaktor durch das drahtlose Sende-/Empfangsteil zu senden; und
einen Steuerungsserver (30), der betreibbar ist, um die aus dem mobilen Sensor gesendeten Informationen zu empfangen, um die Innenraum-Klimatisierungseinrichtung auf Grundlage der empfangenen Informationen zu steuern, wobei der mobile Sensor weiterhin eine Positionserkennungseinrichtung (16) umfasst, um eine eigene Position zu erkennen;
wobei der Controller betreibbar ist, um die Informationen über die von der Positionserkennungseinrichtung erkannte Position und die Informationen über die vom Innenraumklimasensor wahrgenommenen Innenraumklimafaktoren durch das drahtlose Sende-/Empfangsteil an den Steuerungsserver zu senden, **dadurch gekennzeichnet, dass** der Steuerungsserver betreibbar ist, um eine Karte auf Grundlage der Informationen über die Position und der Informationen über die Innenraumklimafaktoren, die aus dem mobilen Sensor empfangen werden, abzuschätzen und um die Innenraum-Klimatisierungseinrichtung so zu steuern, dass die Innenraumklimafaktoren auf Grundlage der abgeschätzten Karte geregelt werden.

2. Innenraum-Klimatisierungssystem nach Anspruch 1, wobei der Innenraumklimafaktor zumindest eines von Temperatur, Feuchtigkeit und Luftreinheit umfasst.

3. Innenraum-Klimatisierungssystem nach Anspruch 1 oder 2, wobei der mobile Sensor weiterhin einen Treiber (20) umfasst, um den mobilen Sensor zu bewegen.

4. Innenraum-Klimatisierungssystem nach einem der vorstehenden Ansprüche, wobei der mobile Sensor weiterhin eine Spracherkennungseinrichtung (14) umfasst, um einen Sprachbefehl von einem Benutzer zu erkennen, und wobei der Controller betreibbar ist, um die Innenraum-Klimatisierungseinrichtung so zu steuern, dass die Innenraumklimafaktoren entsprechend dem von der Spracherkennungseinrichtung erkannten Sprachbefehl geregelt werden.

5. Innenraum-Klimatisierungssystem nach einem der vorstehenden Ansprüche, wobei der mobile Sensor ein mobiler Roboter ist.

6. Innenraum-Klimatisierungssystem nach einem der vorstehenden Ansprüche, wobei der mobile Sensor, die Innenraum-Klimatisierungseinrichtung und der Steuerungsserver durch ein Heimnetzwerk miteinander verbunden sind.

7. Innenraum-Klimatisierungssystem nach einem der vorstehenden Ansprüche, das weiterhin einen Zugangspunkt (52) umfasst, wobei der Steuerungsserver an den Zugangspunkt angeschlossen ist und das drahtlose Sende-/Empfangsteil betreibbar ist, um auf den Zugangspunkt, der an den Steuerungsserver angeschlossen ist, drahtlos zuzugreifen, um Zugang zum Heimnetzwerk zu haben.

8. Innenraum-Klimatisierungssystem nach einem der vorstehenden Ansprüche, wobei der Steuerungsserver mit der Innenraum-Klimatisierungseinrichtung durch Übertragung über das Stromnetz bzw. Power Line Communication (PLC) verbunden ist.

9. Innenraum-Klimatisierungssystem nach einem der vorstehenden Ansprüche, wobei die Positionserkennungseinrichtung (16) umfasst:
eine Videosignalverarbeitungsplatte, um ein Videosignal zu verarbeiten; und
eine Kamera, um eine eigene Position zu erkennen, wobei:
der Controller betreibbar ist, um die Kamera der Positionserkennungseinrichtung so zu steuern, dass sie eine photographische Aufnahme macht zwecks Erkennung der eigenen Position, in Reaktion auf eine Eingabe eines Benutzers,
um die Videosignalverarbeitungsplatte so zu steuern, dass sie ein Videosignal der aus der Kamera gesendeten photographischen Aufnahme verarbeitet; und
um das Videosignal zu analysieren und die Position des mobilen Sensors zu bestimmen.

10. Innenraum-Klimatisierungssystem nach einem der Ansprüche 4 oder 5 - 9, bei Abhängigkeit von Anspruch 4, wobei die Spracherkennungseinrichtung (14) eine Spracherkennungs-Engine umfasst und betreibbar ist, um den Sprachbefehl des Benutzers durch die Spracherkennungs-Engine zu analysieren, um einen vorgegebenen Code auf Grundlage des analysierten Sprachbefehls zu erzeugen und um den entsprechenden Code an den Controller zu senden.

11. Innenraum-Klimatisierungssystem nach Anspruch 10, wobei der Controller betreibbar ist, um ein auf dem empfangenen Code beruhendes Steuerungssignal an den Steuerungsserver zu senden und um die auf den Steuerungsserver zugreifende Innenraum-Klimatisierungseinrichtung zu steuern.

12. Innenraum-Klimatisierungssystem nach Anspruch 11, das weiterhin einen Lautsprecher umfasst, um ein kontrolliertes Ergebnis als Sprache auszugeben, wobei das kontrollierte Ergebnis aus der Innenraum-Klimatisierungseinrichtung zum mobilen Sensor durch den Steuerungsserver gesendet wird.

13. Innenraum-Klimatisierungssystem nach einem der vorstehenden Ansprüche, wobei der Innenraumklimasensor einen Temperatursensor (12a) und einen Luftreinheitssensor (12b) umfasst, um die Innenraumklimafaktoren wahrzunehmen.

14. Innenraum-Klimatisierungssystem nach einem der Ansprüche 3 - 13, wobei der mobile Sensor weiterhin ein Hinderniswahrnehmungsteil zum Wahrnehmen eines Hindernisses umfasst, das zu bewegen ist.

15. Innenraum-Klimatisierungssystem nach Anspruch 14, wobei das Hinderniswahrnehmungsteil umfasst:
eine Videosignalverarbeitungsplatte, um ein Videosignal zu verarbeiten; und
eine Kamera, wobei das Videosignal einer von der Kamera gemachten photographischen Aufnahme durch die Videosignalverarbeitungsplatte verarbeitet wird und der Controller betreibbar ist, um den Treiber so zu steuern, dass er auf Grundlage des verarbeiteten Videosignals, empfangen aus der Videosignalverarbeitungsplatte des Hinderniswahrnehmungsteils, arbeitet, damit dem mobilen Sensor das Überwinden des Hindernisses ermöglicht wird.

16. Innenraum-Klimatisierungssystem nach einem der vorstehenden Ansprüche, wobei die Karte durch eine Mehrzahl rechteckiger Gitter aufgeteilt ist und die Informationen über die in einem der rechteckigen Gitter wahrgenommenen Innenraumklimafaktoren die gleichen sind.

17. Innenraum-Klimatisierungssystem nach Anspruch 16, wobei der Steuerungsserver betreibbar ist, um Informationen über die Position und die Innenraumklimafaktoren aus einer vorgegebenen Anzahl von Gittern zu empfangen und um die Innenraumklimafaktoren auf Grundlage der empfangenen Informationen durch Anwendung eines Echtzeit-Schätzalgorithmus einzuschätzen.

18. Verfahren zur Steuerung eines Innenraum-Klimatisierungssystems mit einer Innenraum-Klimatisierungseinrichtung (4), um zumindest einen Innenraumklimafaktor zu regeln, wobei das Verfahren die Schritte umfasst:
Bewegen eines mobilen Sensors (10);
Wahrnehmen des Innenraumklimafaktors und Erkennen einer eigenen Position am mobilen Sensor (10);
Senden der Informationen über die eigene Position und der Informationen über den wahrgenommenen Innenraumklimafaktor aus dem mobilen Sensor an einen Steuerungsserver (30);
Steuern der Innenraum-Klimatisierungseinrichtung auf Grundlage der aus dem mobilen Sensor empfangenen Informationen am Steuerungsserver;
**gekennzeichnet durch**
Abschätzen einer Karte auf Grundlage der Informationen über die Position und der Informationen über die Innenraumklimafaktoren, die aus dem mobilen Sensor empfangen werden, und Steuern der Innenraum-Klimatisierungseinrichtung, um die Innenraumklimafaktoren auf Grundlage der abgeschätzten Karte zu regeln, am Steuerungsserver.

19. Verfahren nach Anspruch 18, wobei der Innenraumklimafaktor zumindest eines von Temperatur, Feuchtigkeit und Luftreinheit umfasst.

20. Verfahren nach Anspruch 18 oder 19, das weiterhin umfasst:
Erkennen eines Sprachbefehls von einem Benutzer; und
Steuern der Innenraum-Klimatisierungseinrichtung, um die Innenraumklimafaktoren entsprechend dem erkannten Sprachbefehl zu regeln.

## Revendications

1. Système de climatisation d'intérieur possédant un dispositif de climatisation d'intérieur (40) destiné à réguler au moins un facteur d'environnement intérieur, comprenant :
un capteur mobile (10) susceptible de se déplacer, le capteur mobile comprenant :
une partie émission/réception sans fil (22) susceptible d'émettre et de recevoir sans fil des informations ;
un capteur de facteur d'environnement intérieur (12) susceptible de sonder l'environnement intérieur ; et
un dispositif de commande (24) susceptible d'émettre les informations relatives aux facteurs d'environnement intérieur, captés par le capteur de facteur d'environnement intérieur, par l'intermédiaire de la partie émission/réception sans fil ; et
un serveur de commande (30) susceptible de recevoir les informations émises par le capteur mobile de manière à commander le dispositif de climatisation d'intérieur en se fondant sur les informations reçues, le capteur mobile comprenant en outre un dispositif de reconnaissance de position (16) lui permettant de reconnaître sa propre position ;
le dispositif de commande étant susceptible d'émettre les informations de position reconnues par le dispositif de reconnaissance de position et les informations relatives aux facteurs d'environnement intérieur captés par le capteur de facteur d'environnement intérieur à destination du serveur de commande par l'intermédiaire de la partie émission/réception sans fil, **caractérisé en ce que**
le serveur de commande est susceptible d'estimer un plan en se fondant sur les informations de position et les informations relatives aux facteurs d'environnement intérieur reçues du capteur mobile, et de commander le dispositif de climatisation d'intérieur en vue de réguler les facteurs d'environnement intérieur en fonction du plan estimé.

2. Système de climatisation d'intérieur selon la revendication 1, dans lequel le facteur d'environnement intérieur comprend la température, et/ou l'humidité et/ou la pureté de l'air.

3. Système de climatisation d'intérieur selon la revendication 1 ou 2, dans lequel le capteur mobile comprend en outre un dispositif d'entraînement (20) permettant de déplacer le capteur mobile.

4. Système de climatisation d'intérieur selon l'une quelconque des revendications précédentes, dans lequel le capteur mobile comprend en outre un dispositif de reconnaissance vocale (14) lui permettant de reconnaître une instruction vocale d'un utilisateur, et dans lequel le dispositif de commande est susceptible de commander le dispositif de climatisation d'intérieur pour réguler les facteurs d'environnement intérieur conformément à l'instruction vocale reconnue par le dispositif de reconnaissance vocale.

5. Système de climatisation d'intérieur selon l'une quelconque des revendications précédentes, dans lequel le capteur mobile est un robot mobile.

6. Système de climatisation d'intérieur selon l'une quelconque des revendications précédentes, dans lequel le capteur mobile, le dispositif de climatisation d'intérieur et le serveur de commande sont reliés entre eux par l'intermédiaire d'un réseau domestique.

7. Système de climatisation d'intérieur selon l'une quelconque des revendications précédentes, comprenant en outre un point d'accès (52), le serveur de commande étant connecté avec le point d'accès et la partie émission/réception sans fil étant susceptible d'accéder sans fil au point d'accès connecté avec le serveur de commande pour accéder au réseau domestique.

8. Système de climatisation d'intérieur selon l'une quelconque des revendications précédentes, dans lequel le serveur de commande est relié au dispositif de climatisation d'intérieur selon la technique des courants porteurs en ligne (CPL).

9. Système de climatisation d'intérieur selon l'une quelconque des revendications précédentes, dans lequel le dispositif de reconnaissance de position (16) comprend :
une carte de traitement de signal vidéo destinée à traiter un signal vidéo, et
une caméra lui permettant de reconnaître sa propre position ;
le dispositif de commande étant susceptible de commander la caméra du dispositif de reconnaissance de position pour prendre une photographie lui permettant de reconnaître sa propre position en réaction à une contribution de la part d'un utilisateur,
de commander la carte de traitement de signal vidéo pour traiter un signal vidéo de la photographie transmise par la caméra ; et
d'analyser le signal vidéo et de déterminer la position du capteur mobile.

10. Système de climatisation d'intérieur selon la revendication 4 ou l'une quelconque des revendications 5 à 9, lorsqu'elles dépendent de la revendication 4, dans lequel le dispositif de reconnaissance vocale (14) comprend un moteur de reconnaissance vocale permettant d'analyser l'instruction vocale de l'utilisateur par l'intermédiaire du moteur de reconnaissance vocale, de créer un code prédéterminé en se fondant sur l'instruction vocale analysée, et de transmettre le code correspondant au dispositif de commande.

11. Système de climatisation d'intérieur selon la revendication 10, dans lequel le dispositif de commande est susceptible d'émettre un signal de commande fondé sur le code reçu à destination du serveur de commande et de commander le dispositif de climatisation d'intérieur ayant accès au serveur de commande.

12. Système de climatisation d'intérieur selon la revendication 11, comprenant en outre un haut-parleur destiné à produire un résultat commandé sous une forme vocale, le résultat commandé étant émis par le dispositif de climatisation d'intérieur à destination du capteur mobile par l'intermédiaire du serveur de commande.

13. Système de climatisation d'intérieur selon l'une quelconque des revendications précédentes, dans lequel le capteur de facteur d'environnement intérieur comprend un capteur de température (12a) et un détecteur de pureté de l'air (12b) destinés à sonder l'environnement intérieur.

14. Système de climatisation d'intérieur selon l'une quelconque des revendications 3 à 13, dans lequel le capteur mobile comprend en outre une partie de détection d'obstacle destinée à détecter un obstacle à déplacer.

15. Système de climatisation d'intérieur selon la revendication 14, dans lequel la partie de détection d'obstacle comprend :
une carte de traitement de signal vidéo destinée à traiter un signal vidéo ; et
une caméra, le signal vidéo d'une photographie prise par la caméra étant traité par la carte de traitement de signal vidéo, et le dispositif de commande étant susceptible de commander le dispositif d'entraînement afin qu'il procède en fonction du signal vidéo traité reçu de la carte de traitement de signal vidéo de la partie de détection d'obstacle pour permettre au capteur mobile de gérer l'obstacle.

16. Système de climatisation d'intérieur selon l'une quelconque des revendications précédentes, dans lequel le plan est divisé par une pluralité de grilles de carrés et les informations relatives aux facteurs d'environnement intérieur détectés dans une des grilles de carrés sont les mêmes.

17. Système de climatisation d'intérieur selon la revendication 16, dans lequel le serveur de commande est susceptible de recevoir les informations de position et les informations relatives aux facteurs d'environnement intérieur issues d'un nombre prédéterminé de grilles et d'estimer les facteurs d'environnement intérieur en fonction des informations reçues en mettant en oeuvre un algorithme d'estimation en temps réel.

18. Procédé de commande d'un système de climatisation d'intérieur possédant un dispositif de climatisation d'intérieur (40) destiné à réguler au moins un facteur d'environnement intérieur, le procédé comprenant les étapes consistant à :
faire se déplacer un capteur mobile (10) ;
sonder l'environnement intérieur et reconnaître la position propre au niveau du capteur mobile (10) ;
émettre les informations relatives à la position propre et les informations relatives aux facteurs d'environnement intérieur détectés à destination d'un serveur de commande (30) à partir du capteur mobile ;
commander le dispositif de climatisation d'intérieur en fonction des informations reçues du capteur mobile, au niveau du serveur de commande ;
**caractérisé par**
l'estimation d'un plan fondé sur les informations de position et les informations relatives aux facteurs d'environnement intérieur reçues du capteur mobile, et la commande du dispositif de climatisation d'intérieur afin qu'il régule les facteurs d'environnement intérieur en fonction du plan estimé, au niveau du serveur de commande.

19. Procédé selon la revendication 18, dans lequel le facteur d'environnement intérieur comprend la température et/ou l'humidité et/ou la pureté de l'air.

20. Procédé selon l'une quelconque des revendications 18 ou 19, comprenant en outre :
la reconnaissance d'une instruction vocale d'un utilisateur ; et
la commande du dispositif de climatisation d'intérieur afin qu'il régule les facteurs d'environnement intérieur conformément à l'instruction vocale reconnue.
